# EUROPEAN PATENT SPECIFICATION

(11) **EP 4 312 284 B1**
(45) Date of publication and mention of the grant of the patent: **04.03.2026**
(21) Application number: 23154760.5
(22) Date of filing: 02.02.2023
(51) Int. Cl.: H01M 4/38, H01M 4/52, H01M 4/13, H01M 4/62

(54) **POSITIVE ELECTRODE, AND RECHARGEABLE LITHIUM BATTERY INCLUDING THE SAME**
POSITIVELEKTRODE UND WIEDERAUFLADBARE LITHIUMBATTERIE DAMIT
ÉLECTRODE POSITIVE ET BATTERIE AU LITHIUM RECHARGEABLE LA COMPRENANT

(30) Priority: 27.07.2022 KR 20220093413
(43) Date of publication of application: 31.01.2024
(73) Proprietor: Samsung SDI Co., Ltd., Yongin-si, Gyeonggi-do 17084 (KR)
(72) Inventor: PARK, Hyejin, 17084 Yongin-si (KR); YANG, Yeji, 17084 Yongin-si (KR); CHO, Wonseok, 17084 Yongin-si (KR); LEE, Tae Jin, 17084 Yongin-si (KR); PARK, Sangwoo, 17084 Yongin-si (KR); KIM, Sundae, 17084 Yongin-si (KR); KIM, Sanghyung, 17084 Yongin-si (KR); KIM, Minseo, 17084 Yongin-si (KR); WOO, Myungheui, 17084 Yongin-si (KR); KIM, Sanghoon, 17084 Yongin-si (KR); RA, Hana, 17084 Yongin-si (KR); RYU, Bokyung, 17084 Yongin-si (KR)
(74) Representative: Marks & Clerk LLP

(56) References cited:
- WO-A1-99/23065
- US-B2- 10 186 732

## Description

### BACKGROUND OF THE INVENTION

### (a) Field of the Invention

This disclosure relates to a positive electrode and a rechargeable lithium battery including the same.

### (b) Description of the Related Art

A rechargeable lithium battery may be recharged and has three or more times high energy density per unit weight as a conventional lead storage battery, nickel-cadmium battery, nickel hydrogen battery, nickel zinc battery and the like.

It may be also charged at a high rate and thus, is commercially manufactured for a laptop, a cell phone, an electric tool, an electric bike, and the like, and researches on improvement of additional energy density have been actively made.

In the rechargeable lithium battery, the positive electrode is fabricated by mixing a positive electrode active material, a binder, and a conductive agent in an organic solvent and dispersing the mixture to prepare a positive electrode slurry composition, coating the positive electrode slurry composition on a positive electrode current collector, and then, drying and compressing the coated current collector

In order to uniformly coat the positive electrode slurry composition on the current collector, the positive electrode active material, the binder, and the conductive agent should not be agglomerated with one another but uniformly dispersed in the organic solvent and have viscosity stability over time. When the positive electrode slurry composition is not uniformly coated on the current collector, a uniform battery chemical reaction may not occur, but there may be problems such as electrode deformation due to an electrode thickness deviation and peeling of the active material during charging and discharging.

### SUMMARY OF THE INVENTION

An embodiment provides a positive electrode having excellent high-temperature characteristics.

Another embodiment provides a rechargeable lithium battery having improved storage characteristics at a high temperature by including the positive electrode.

An embodiment of the present disclosure provides a positive electrode including a positive electrode active material, a binder, a conductive material, and an additive represented by Chemical Formula 1 or Chemical Formula 2.

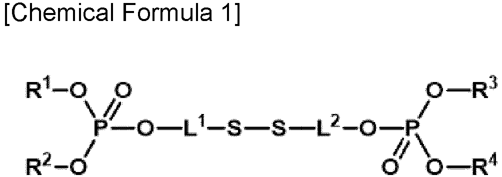

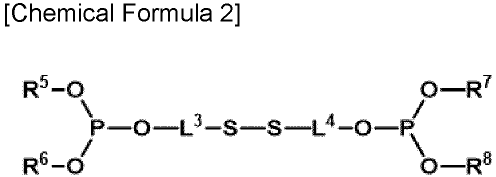

In Chemical Formula 1 and Chemical Formula 2,
R¹ to R⁸ are each independently a substituted or unsubstituted C1 to C10 alkyl group, a substituted or unsubstituted C2 to C10 alkenyl group, a substituted or unsubstituted C3 to C10 cycloalkyl group, a substituted or unsubstituted C3 to C10 cycloalkenyl group, a substituted or unsubstituted C2 to C10 alkynyl group, a substituted or unsubstituted C3 to C10 cycloalkynyl group, or a substituted or unsubstituted C6 to C20 aryl group,
R¹ to R⁸ are each independently present, or
at least one of R¹ and R²; R³ and R⁴; R⁵ and R⁶; and R⁷ and R⁸ is linked to form a substituted or unsubstituted C2 to C30 monocyclic or C2 to C50 polycyclic aliphatic heterocycle, or a substituted or unsubstituted C2 to C30 monocyclic or C2 to C50 polycyclic aromatic heterocycle, and
L¹ to L⁴ are each independently a substituted or unsubstituted C1 to C20 alkylene group.

Chemical Formula 1 may be represented by Chemical Formula 1A or Chemical Formula 1B. 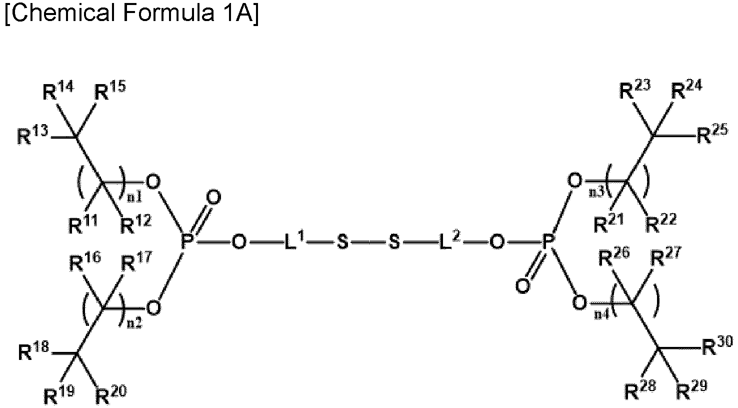 wherein, in Chemical Formula 1A,
R¹¹ to R³⁰ are each independently hydrogen, a halogen, or a substituted or unsubstituted C1 to C10 alkyl group,
n1 to n4 are each independently an integer of 0 to 4, and
L¹ and L² are each independently a substituted or unsubstituted C1 to C20 alkylene group; 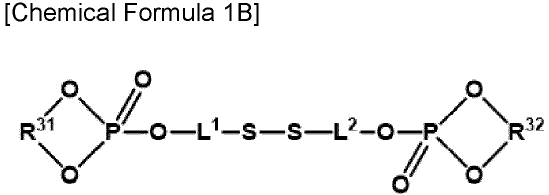
wherein, in Chemical Formula 1B,
R³¹ and R³² are each independently a substituted or unsubstituted C2 to C10 alkylene group, and
L¹ and L² are each independently a substituted or unsubstituted C1 to C20 alkylene group.

Chemical Formula 1B may be represented by Chemical Formula 1B- I or Chemical Formula 1B-II.

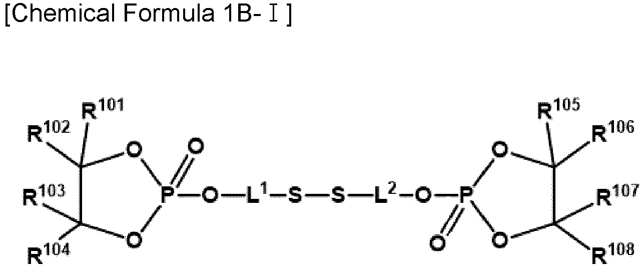

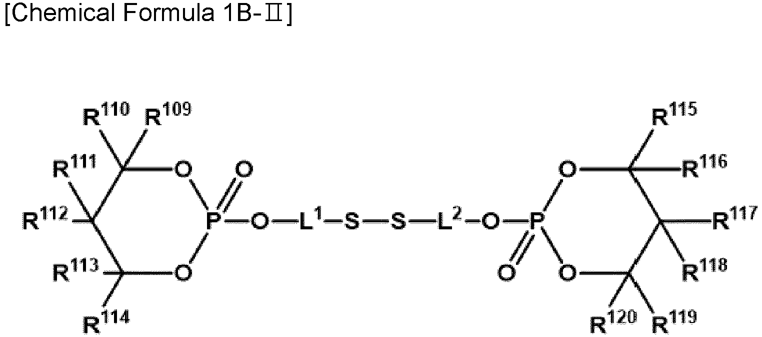

In Chemical Formula 1B- I and Chemical Formula 1B-II,
R¹⁰¹ to R¹²⁰ are each independently hydrogen, a halogen, or a substituted or unsubstituted C1 to C10 alkyl group, and
L¹ and L² are each independently a substituted or unsubstituted C1 to C20 alkylene group.

Chemical Formula 2 may be represented by Chemical Formula 2A or Chemical Formula 2B.

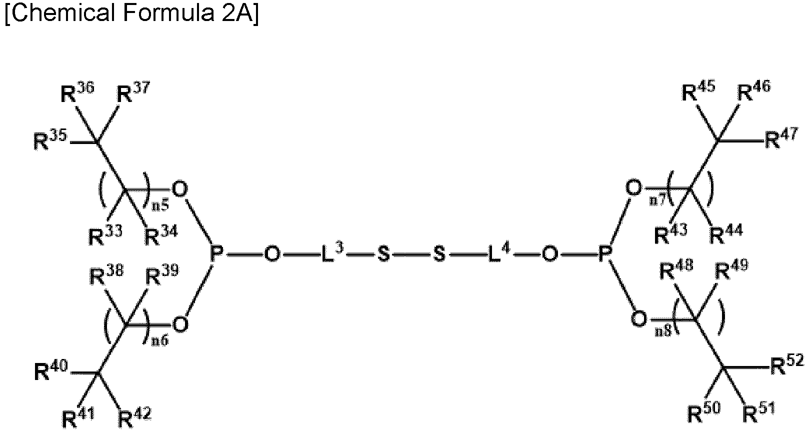

In Chemical Formula 2A,
R³³ to R⁵² are each independently hydrogen, a halogen, or a substituted or unsubstituted C1 to C10 alkyl group,
n5 to n8 are each independently an integer of 0 to 4, and
L³ and L⁴ are each independently a substituted or unsubstituted C1 to C20 alkylene group; 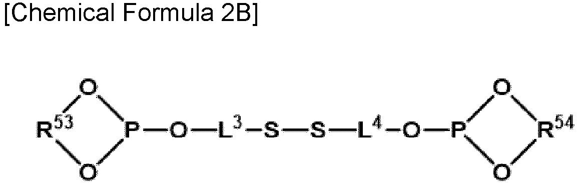
wherein, in Chemical Formula 2B,
R⁵³ and R⁵⁴ are each independently a substituted or unsubstituted C2 to C10 alkylene group, and
L³ and L⁴ are each independently a substituted or unsubstituted C1 to C20 alkylene group.

Chemical Formula 2B may be represented by Chemical Formula 2B- I or Chemical Formula 2B-II.

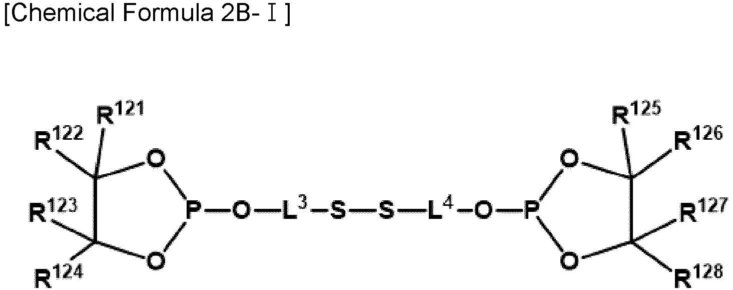

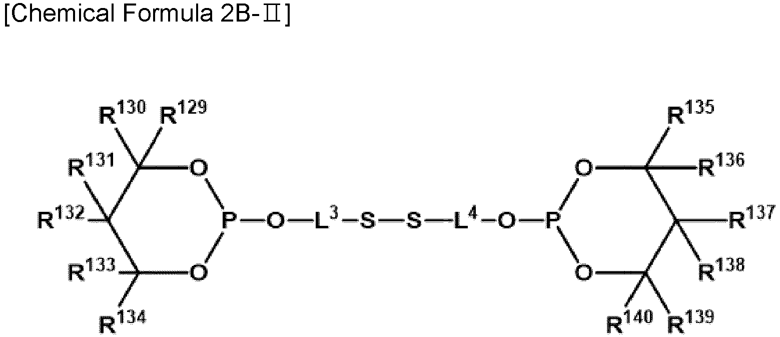

In Chemical Formula 2B- I and Chemical Formula 2B-II,
R¹²¹ to R¹⁴⁰ are each independently hydrogen, a halogen, or a substituted or unsubstituted C1 to C10 alkyl group, and
L³ and L⁴ are each independently a substituted or unsubstituted C1 to C20 alkylene group.

Chemical Formula 1 may be represented by Chemical Formula 1B-I-1 or Chemical Formula 2B- I -1.

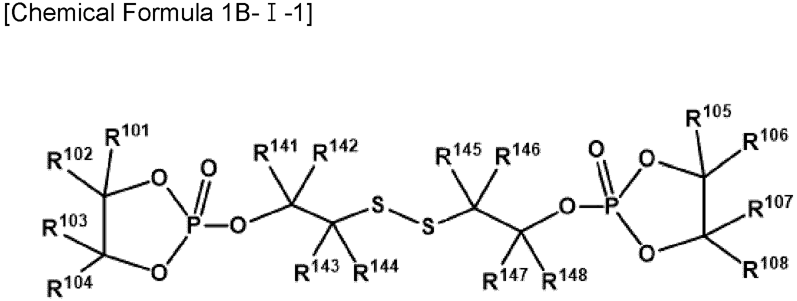

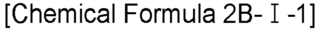

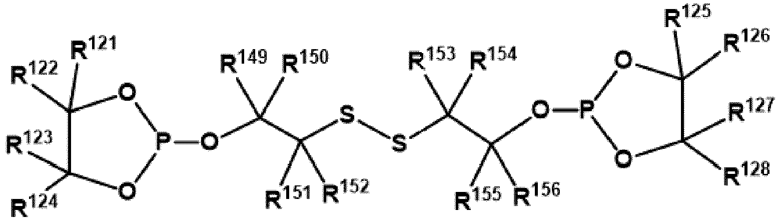

In Chemical Formula 1B-I-1 and Chemical Formula 2B- I -1,
R¹⁰¹ to R¹⁰⁸, R¹²¹ to R¹²⁸, and R¹⁴¹ to R¹⁵⁶ are each independently hydrogen, a halogen, or a substituted or unsubstituted C1 to C10 alkyl group.

The additive may be included in an amount of about 0.001 to 0.05 parts by weight based on 100 parts by weight of the positive electrode active material, the binder, and the conductive material.

The additive may be included in an amount of about 0.005 to 0.05 parts by weight based on 100 parts by weight of the positive electrode active material, the binder, and the conductive material.

The positive electrode active material may be represented by Chemical Formula 4.

[Chemical Formula 4] LiₓM¹_{y}M²_{z}M³_{1-y-z}O_{2±a}X_{b}

In Chemical Formula 4,
0.5≤x≤1.8, 0≤a≤0.1, 0≤b≤0.1, 0<y≤1, 0≤z≤1, 0<y+z≤1, M¹, M², and M³ are each independently one or more elements selected from Ni, Co, Mn, Al, B, Ba, Ca, Ce, Cr, Fe, Mo, Nb, Si, Sr, Mg, Ti, V, W, Zr, or La, and a combination **thereof,** and X is one or more elements selected from F, S, P, or Cl.

In Chemical Formula 4, 0.8≤y≤1, 0≤z≤0.2, and M¹ may be Ni.

Another embodiment of the present disclosure provides a rechargeable lithium battery including the aforementioned positive electrode; a negative electrode including a negative electrode active material; and an electrolyte solution for a rechargeable lithium battery.

A positive electrode film may be further included on the surface of the positive electrode, and the positive electrode film may be formed by coordinating the additive represented by Chemical Formula 1 or Chemical Formula 2 to the positive electrode active material.

The negative electrode active material may include at least one of graphite and Si composite.

The Si composite may include a core including Si-based particles and an amorphous carbon coating layer.

The Si-based particles may include at least one of Si particles, a Si-C composite, SiOₓ (0 < x ≤ 2), and a Si alloy.

At least some of the above and other features of the invention are set out in the claims.

It is possible to implement a rechargeable lithium battery with improved high-temperature characteristics by suppressing the collapse of the positive electrode active material and thus suppressing an increase in the resistance of the battery during high-temperature storage and reducing the amount of gas generated.

In addition, by using the additive of the present embodiments in the positive electrode, problems due to electrochemical reactions that may occur when used as an additive in an electrolyte solution may be prevented.

### BRIEF DESCRIPTION OF THE DRAWINGS

FIG. 1 is a schematic view illustrating a rechargeable lithium battery according to an embodiment of the present disclosure.
FIG. 2 is a graph showing the amount of heat flow according to temperature measured by differential scanning calorimetry (DSC) for the positive electrodes according to Examples 1 to 3 and Comparative Example 1.
FIGS. 3 and 4 show XPS analysis results of the positive electrode of the rechargeable lithium battery cells prepared according to Example 1 and Comparative Example 1.
FIG. 5 is a graph showing the results of negative electrode cyclic voltammetry (CV) at room temperature of the electrolyte solutions according to Comparative Examples 1 and 4.

### DETAILED DESCRIPTION OF THE EMBODIMENTS

Hereinafter, embodiments of the present disclosure are described in detail. However, the embodiments are presented as an example, and the present disclosure is not limited thereto, and the present disclosure is only defined by the scope of the claims.

In the present specification, when a definition is not otherwise provided, "substituted" refers to replacement of at least one hydrogen of a substituent or a compound by deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C2 to C30 alkenyl group, a C3 to C30 cycloalkyl group, a C3 to C30 cycloalkenyl group, a C2 to C30 alkynyl group, a C3 to C30 cycloalkynyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In one or more embodiments of the present disclosure, "substituted" refers to replacement of at least one hydrogen of a substituent or a compound by deuterium, a halogen, a C1 to C30 alkyl group, a C2 to C10 alkenyl group, a C3 to C10 cycloalkyl group, a C3 to C10 cycloalkenyl group, a C2 to C10 alkynyl group, a C3 to C10 cycloalkynyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in one or more embodiments of the present disclosure, "substituted" refers to replacement of at least one hydrogen of a substituent or a compound by deuterium, a halogen, a C1 to C20 alkyl group, a C6 to C30 aryl group, a C1 to C10 fluoroalkyl group, or a cyano group. In addition, in one or more embodiments of the present disclosure, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In addition, in one or more embodiments of the present disclosure, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A positive electrode according to an embodiment includes a positive electrode active material, a binder, a conductive material, and an additive represented by Chemical Formula 1 or Chemical Formula 2.

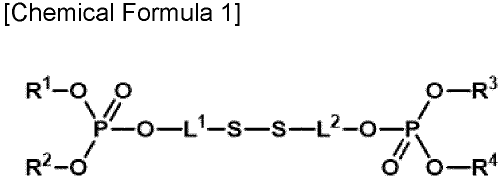

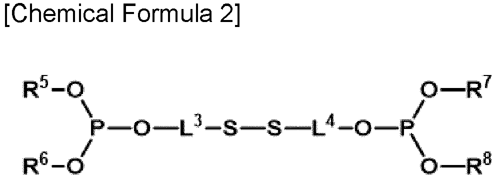

**In** Chemical Formula 1 and Chemical Formula 2,
R¹ to R⁸ are each independently a substituted or unsubstituted C1 to C10 alkyl group, a substituted or unsubstituted C2 to C10 alkenyl group, a substituted or unsubstituted C3 to C10 cycloalkyl group, a substituted or unsubstituted C3 to C10 cycloalkenyl group, a substituted or unsubstituted C2 to C10 alkynyl group, a substituted or unsubstituted C3 to C10 cycloalkynyl group, or a substituted or unsubstituted C6 to C20 aryl group,
R¹ to R⁸ are each independently present, or
at least one of R¹ and R²; R³ and R⁴; R⁵ and R⁶; and R⁷ and R⁸ is linked to form a substituted or unsubstituted C2 to C30 monocyclic or C2 to C50 polycyclic aliphatic heterocycle, or a substituted or unsubstituted C2 to C30 monocyclic or C2 to C50 polycyclic aromatic heterocycle, and
L¹ to L⁴ are each independently a substituted or unsubstituted C1 to C20 alkylene group.

The additive may be coordinated with the positive electrode active material and thus form a film on the surface of the positive electrode and suppress collapse of the positive electrode active material.

The film on the surface of the positive electrode may be formed by coordination of the additive represented by Chemical Formula 1 or 2 with the positive electrode active material.

Specifically, the film may be a complex compound formed by a lone pair of electrons of disulfide of the additive coordinating with a metal of the positive electrode active material.

In particular, when directly applied to the positive electrode, the additive may prevent an electrochemical reaction occurring when the additive is applied to an electrolyte solution and thus discoloring of the electrolyte solution, and in addition, when applied to the electrolyte solution, the additive is first decomposed by reduction on the surface of the negative electrode before forming a complex compound at the positive electrode and resultantly, reduces an amount of the complex compound produced at the positive electrode, but when applied to the positive electrode, the amount of the complex compound with the positive electrode active material may be much increased.

In other words, when the additive is applied to the positive electrode, the surface protection effect of the positive electrode may be much improved.

Specifically, the additive is a bisphosphate-based or bisphosphite-based compound and may have a structure linked by a disulfide linker.

These bisphosphate-based and bisphosphite-based compounds may be decomposed into two phosphate-based compounds or two phosphite-based compounds based on the disulfide linker.

These compounds may form a film on each surface of the positive and negative electrodes and thus suppress a resistance increase on the films during the high-temperature storage and increase film stability, improving high temperature cycle-life and thermal safety characteristics.

For example, the additive may be represented by Chemical Formula 1A or Chemical Formula 1B.

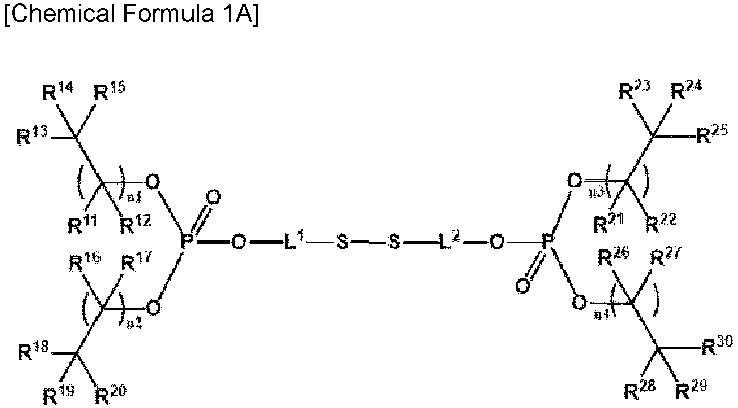

In Chemical Formula 1A,
R¹¹ to R³⁰ are each independently hydrogen, a halogen, or a substituted or unsubstituted C1 to C10 alkyl group,
n1 to n4 are each independently an integer of 0 to 4, and
L¹ and L² are each independently a substituted or unsubstituted C1 to C20 alkylene group; 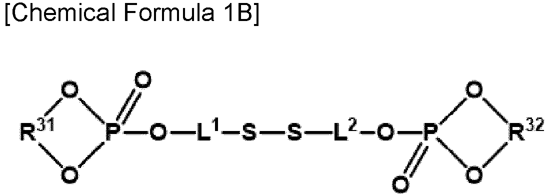
wherein, in Chemical Formula **1B,**
R³¹ and R³² are each independently a substituted or unsubstituted C2 to C10 alkylene group, and
L¹ and L² are each independently a substituted or unsubstituted C1 to C20 alkylene group.

**In** one or more embodiments, R¹¹ to R³⁰ may each independently be hydrogen, a halogen, or a substituted or unsubstituted C1 to C5 alkyl group, n1 to n4 may each independently be one of an integer of 0 to 3, and L¹ and L² may each independently be a substituted or unsubstituted C2 to C20 alkylene group.

In one or more embodiments, R¹¹ to R³⁰ may each independently be hydrogen, a halogen, or a substituted or unsubstituted C1 to C3 alkyl group, n1 to n4 are each independently an integer of 0 to 2, and L¹ and L² may each independently be a substituted or unsubstituted C2 to C10 alkylene group.

In one or more embodiments, R³¹ and R³² may each independently be a substituted or unsubstituted C2 to C5 alkylene group, and L¹ and L² may each independently be a substituted or unsubstituted C2 to C20 alkylene group.

In one or more embodiments, R³¹ and R³² may each independently be a substituted or unsubstituted C2 to C4 alkylene group, and L¹ and L² may each independently be a substituted or unsubstituted C2 to C10 alkylene group.

For example, Chemical Formula 1B may be represented by Chemical Formula 1B- I or Chemical Formula 1 B-II.

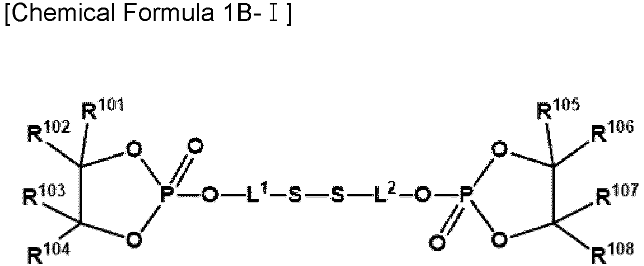

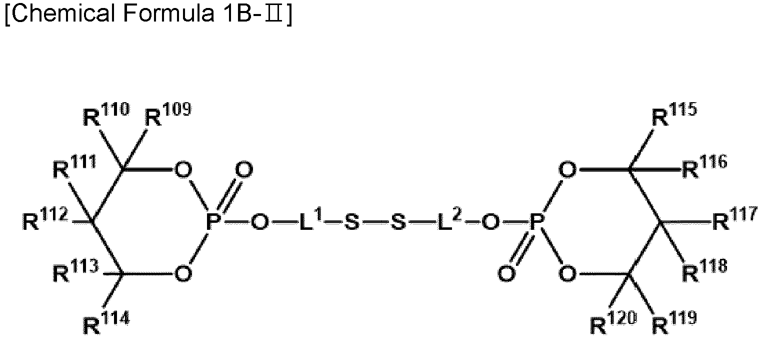

In Chemical Formula 1B- I and Chemical Formula 1B-II,
R¹⁰¹ to R¹²⁰ are each independently hydrogen, a halogen, or a substituted or unsubstituted C1 to C10 alkyl group, and
L¹ and L² are the same as described above.

In one or more embodiments, R¹⁰¹ to R¹²⁰ may each independently be hydrogen, a halogen, or a substituted or unsubstituted C1 to C5 alkyl group.

In one or more embodiments, each of R¹⁰¹ to R¹²⁰ may be hydrogen.

As another example, the additive may be represented by Chemical Formula 2A or Chemical Formula 2B.

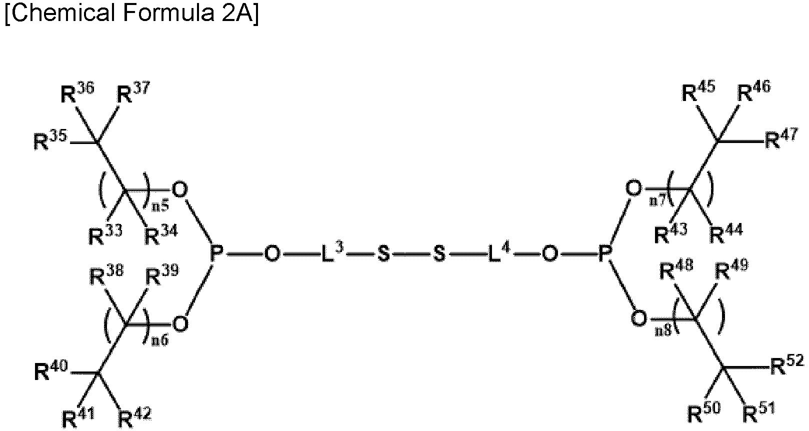

In Chemical Formula 2A,
R³³ to R⁵² are each independently hydrogen, a halogen, or a substituted or unsubstituted C1 to C10 alkyl group,
n5 to n8 are each independently an integer of 0 to 4, and
L³ and L⁴ are each independently a substituted or unsubstituted C1 to C20 alkylene group; 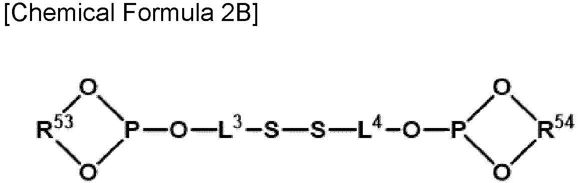
wherein, in Chemical Formula 2B,
R⁵³ and R⁵⁴ are each independently a substituted or unsubstituted C2 to C10 alkylene group, and
L³ and L⁴ are each independently a substituted or unsubstituted C1 to C20 alkylene group.

In one or more embodiments, R³³ to R⁵² may each independently be hydrogen, a halogen or a substituted or unsubstituted C1 to C5 alkyl group, n5 to n8 may each independently be one of an integer of 0 to 3, and L³ and L⁴ may each independently be a substituted or unsubstituted C2 to C20 alkylene group.

In one or more embodiments, R³³ to R⁵² may each independently be hydrogen, a halogen, or a substituted or unsubstituted C1 to C3 alkyl group, n5 to n8 may each independently be one of an integer of 0 to 2, and L³ and L⁴ may each independently be a substituted or unsubstituted C2 to C10 alkylene group.

In one or more embodiments, R⁵³ and R⁵⁴ may each independently be a substituted or unsubstituted C2 to C5 alkylene group, and L³ and L⁴ may each independently be a substituted or unsubstituted C2 to C20 alkylene group.

In one or more embodiments, R⁵³ and R⁵⁴ may each independently be a substituted or unsubstituted C2 to C4 alkylene group, and L³ and L⁴ may each independently be a substituted or unsubstituted C2 to C10 alkylene group.

For example, Chemical Formula 2B may be represented by Chemical Formula 2B- I or Chemical Formula 2B-II.

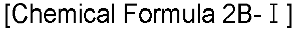

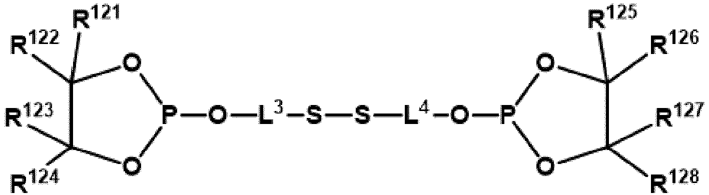

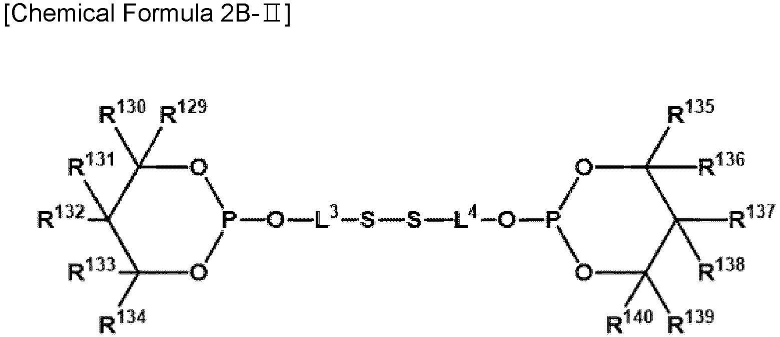

In Chemical Formula 2B- I and Chemical Formula 2B-II,
R¹²¹ to R¹⁴⁰ are each independently hydrogen, a halogen, or a substituted or unsubstituted C1 to C10 alkyl group, and
L³ and L⁴ are the same as described above.

In one or more embodiments, R¹²¹ to R¹⁴⁰ may each independently be hydrogen, a halogen or a substituted or unsubstituted C1 to C5 alkyl group.

In one or more embodiments, R¹²¹ to R¹⁴⁰ may each be hydrogen.

The additive according to one or more embodiments of the present disclosure may be represented by Chemical Formula 1B- I-1 or Chemical Formula 2B- I -1.

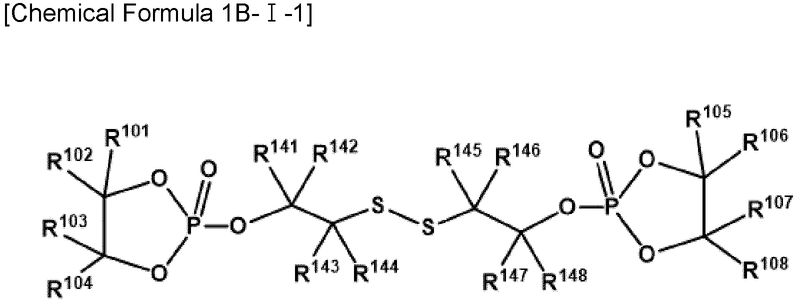

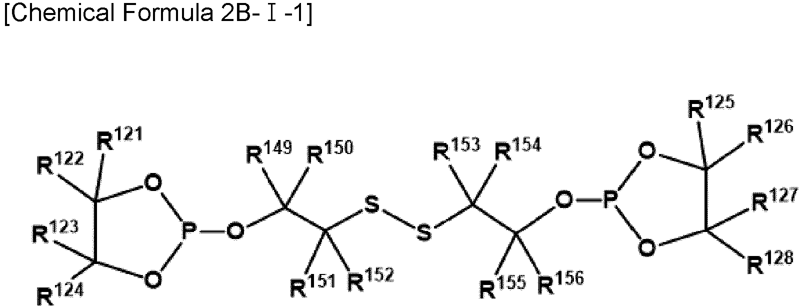

In Chemical Formula 1B-I-1 and Chemical Formula 2B- I -1,
R¹⁰¹ to R¹⁰⁸, R¹²¹ to R¹²⁸, and R¹⁴¹ to R¹⁵⁶ are each independently hydrogen, a halogen, or a substituted or unsubstituted C1 to C10 alkyl group,
L³ and L⁴ are the same as described above.

In one or more embodiments, R¹⁰¹ to R¹⁰⁸, R¹²¹ to R¹²⁸ , and R¹⁴¹ to R¹⁵⁶ may each independently be hydrogen, a halogen, or a substituted or unsubstituted C1 to C5 alkyl group.

In one or more embodiments, R¹⁰¹ to R¹⁰⁸, R¹²¹ to R¹²⁸, and R¹⁴¹ to R¹⁵⁶ may each be hydrogen.

The additive may be included in an amount of about 0.001 to 0.05 parts by weight based on 100 parts by weight of the positive electrode active material, the binder, and the conductive material.

For example, the additive may be included in an amount of about 0.005 to 0.05 parts by weight based on 100 parts by weight of the positive electrode active material, the binder, and the conductive material.

The additive may improve storage characteristics at a high temperature by combining with the positive electrode active material to form a film on the surface of the positive electrode, and in particular, when added in the above content range, a degree of improvement (i.e. reduction) in the amount of gas generated may be significantly exhibited without increasing resistance.
The positive electrode active material may include lithiated intercalation compounds that reversibly intercalate and deintercalate lithium ions.

Specifically, the positive electrode active material may include at least one of composite oxides of a metal selected from cobalt, manganese, nickel, iron, and a combination thereof, and lithium.

Of course, one in which a portion of the metal of the composite oxide may be substituted with another suitable metal, for example, may be at least one selected from LiNiPO₄, LiFePO₄, LiCoPO₄, and LiMnPO₄, and composite oxide having a coating layer on the surface thereof or a mixture of the composite oxide and the composite oxide having a coating layer may be used. The coating layer may include at least one coating element compound selected from an oxide of a coating element, a hydroxide of a coating element, an oxyhydroxide of a coating element, an oxycarbonate of a coating element, and a hydroxycarbonate of a coating element. The compound for the coating layer may be amorphous or crystalline. As the coating element included in the coating layer, Mg, Al, Co, K, Na, Ca, Si, Ti, V, Sn, Ge, Ga, B, As, Zr, or a mixture thereof may be used. The coating layer may be disposed by a method having no adverse influence on properties of a positive electrode active material by using these elements in the compound. For example, the method may include any coating method such as spray coating, dipping, and the like, but is not illustrated in more detail since it is well-known to those who work in the related field.

The positive electrode active material may be, for example, at least one of lithium composite oxides represented by Chemical Formula 4.

[Chemical Formula 4] LiₓM¹_{y}M²_{z}M³_{1-y-z}O_{2±a}X_{b}

In Chemical Formula 4,
0.5≤x≤1.8, 0≤a≤0.1, 0≤b≤0.1, 0<y≤1, 0≤z≤1, 0<y+z≤1, M¹, M², and M³ are each independently one or more elements selected from Ni, Co, Mn, Al, B, Ba, Ca, Ce, Cr, Fe, Mo, Nb, Si, Sr, Mg, Ti, V, W, Zr, or La, and a combination thereof, and X is one or more elements selected from F, S, P, or Cl.

In one or more embodiments the positive electrode active material may be at least one selected from LiCoO₂, LiNiO₂, LiMnO₂, LiMn₂O₄, LiNiₐMn_{b}Co_{c}O₂ (a+b+c=1), LiNiₐMn_{b}Co_{c}Al_{d}O₂ (a+b+c+d=1), and LiNiₑCo_{f}Al_{g}O₂ (e+f+g=1).

For example, in Formula 4, 0.8≤y≤1, 0≤z≤0.2, and M¹ may be Ni.

For example, the positive electrode active material selected from LiNi_{b}Mn_{c}Co_{d}O₂ (b+c+d=1), LiNi_{b}Mn_{c}Co_{d}AlₑO₂ (b+c+d+e=1), and LiNi_{b}Co_{d}AlₑO₂ (b+d+e=1) may be a high Ni-based positive electrode active material.

For example, in the case of the LiNi_{b}Mn_{c}Co_{d}O₂ (b+c+d=1) and LiNi_{b}Mn_{c}Co_{c}Al_{c}O₂ (b+c+d+e=1), the nickel content may be greater than or equal to about 60% (b ≥ 0.6), and more specifically, greater than or equal to about 80% (b ≥ 0.8).

For example, in the case of LiNi_{b}Co_{d}AlₑO₂ (b+d+e=1), the nickel content may be greater than or equal to about 60% (b ≥ 0.6), and more specifically, greater than or equal to about 80% (b ≥ 0.8).

A content of the positive electrode active material may be about 90 wt% to about 98 wt% based on the total weight of the positive electrode composition.

A content of the conductive material and the binder may be about 1 wt% to about 5 wt% based on the total weight of the positive electrode composition, respectively.

The conductive material is included to impart conductivity to the positive electrode, and any electrically conductive material may be used as a conductive material unless it causes a chemical change in a battery. Examples of the conductive material may include a carbon-based material such as natural graphite, artificial graphite, carbon black, acetylene black, ketjen black, carbon fiber, and the like; a metal-based material of a metal powder or a metal fiber including copper, nickel, aluminium, silver, and the like; a conductive polymer such as a polyphenylene derivative; or a mixture thereof.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Another embodiment provides a rechargeable lithium battery including the aforementioned positive electrode; a negative electrode including a negative electrode active material; and an electrolyte solution for a rechargeable lithium battery.

The positive electrode includes a positive electrode current collector and a positive electrode active material layer on the positive electrode current collector, and the positive electrode active material layer includes the positive electrode active material.

The positive electrode current collector may include Al, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon material. The carbon material may be any generally-used carbon-based negative electrode active material in a rechargeable lithium battery. Examples thereof may be crystalline carbon, amorphous carbon, or a mixture thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, a Si-C composite, SiOₓ (0 < x < 2), a Si-Q alloy wherein Q is an element selected from an alkali metal, an alkaline-earth metal, a Group 13 element, a Group 14 element except for Si, a Group 15 element, a Group 16 element, a transition metal, a rare earth element, and a combination thereof, Sn, SnO₂, Sn-R¹¹ wherein R¹¹ is an element selected from an alkali metal, an alkaline-earth metal, a Group 13 element, a Group 14 element except for Sn, a Group 15 element, a Group 16 element, a transition metal, a rare earth element, and a combination thereof. At least one of these materials may be mixed with SiO₂.

The elements Q and R¹¹ may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be vanadium oxide, lithium vanadium oxide, or lithium titanium oxide.

**In one or** more embodiments, the negative electrode active material may include at least one of graphite and a Si composite.

The Si composite may include a core including Si-based particles and an amorphous carbon coating layer, and for example, the Si-based particles may include at least one of Si particles, a Si-C composite, SiOₓ (0 < x ≤ 2), and a Si alloy.

The central portion of the core including Si-based particles may include voids, and a radius of the central portion may correspond to about 30% to about 50% of the radius of the Si composite, an average particle diameter of the Si composite may be about 5µm to 20µm, and an average particle diameter of the Si-based particles may be about 10 nm to about 200 nm.

In the present disclosure, an average particle diameter may be particle size (D50) at a volume ratio of 50% in a cumulative size-distribution curve. For example, the average particle diameter may be, for example, a median diameter (D50) measured utilizing a laser diffraction particle diameter distribution meter.

When the Si-based particles have an average particle diameter within the range, volume expansion during the charge and discharge may be suppressed, and interruption of a conductive path due to particle crushing during the charge and discharge may be prevented or reduced.

The core including the Si-based particles further includes amorphous carbon, and in this case, the central portion does not include amorphous carbon, and the amorphous carbon may present only on the surface portion of the Si composite.

Herein, the surface portion refers to a region from the outermost surface of the center portion to the outermost surface of the Si composite.

In addition, the Si-based particles are substantially uniformly included in the Si composite as whole, that is, the Si-based particles may be present in a substantially uniform concentration in the central portion and the surface portion of the Si composite.

The amorphous carbon may be soft carbon, hard carbon, mesophase pitch carbonized product, calcined coke, or a combination thereof.

The amorphous carbon precursor may include a coal-based pitch, mesophase pitch, petroleum-based pitch, coal-based oil, petroleum-based heavy oil, or a polymer resin such as a phenol resin, a furan resin, or a polyimide resin.

For example, the Si-C composite may include Si particles and crystalline carbon.

The Si particles may be included in an amount of about 1 wt% to about 60 wt%, for example, about 3 wt% to about 60 wt%, based on the total weight of the Si-C composite.

The crystalline carbon may be, for example, graphite, and specifically, natural graphite, artificial graphite, or a combination thereof.

An average particle diameter of the crystalline carbon may be about 5 µm to about 30 µm.

When the negative electrode active material includes the Si composite and the graphite together, the Si composite and the graphite may be included as a mixture, wherein the Si composite and the graphite may be included in a weight ratio of about 1:99 to about 50:50. For example, the Si composite and the graphite may be included in a weight ratio of about 3:97 to about 20:80 or about 5:95 to about 20:80.

In the negative electrode active material layer, the negative electrode active material may be included in an amount of about 95 wt% to about 99 wt% based on the total weight of the negative electrode active material layer.

In an embodiment of the present disclosure, the negative electrode active material layer includes a binder, and optionally a conductive material. In the negative electrode active material layer, a content of the binder may be about 1 wt% to about 5 wt% based on the total weight of the negative electrode active material layer. When it further includes the conductive material, it may include about 90 wt% to about 98 wt% of the negative electrode active material, about 1 wt% to about 5 wt% of the binder, and about 1 wt% to about 5 wt% of the conductive material.

The binder improves binding properties of negative electrode active material particles with one another and with a negative electrode current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylene propylene copolymer, polyethyleneoxide, polyvinylpyrrolidone, polyepichlorohydrin, polyphosphazene, polyacrylonitrile, polystyrene, an ethylene propylene diene copolymer, polyvinylpyridine, chlorosulfonated polyethylene, latex, a polyester resin, an acrylic resin, phenolic resin, an epoxy resin, polyvinyl alcohol, and a combination thereof.

When the water-soluble binder is used as the negative electrode binder, a cellulose-based compound may be further used to provide viscosity as a thickener. The cellulose-based compound includes one or more of carboxylmethyl cellulose, hydroxypropylmethyl cellulose, methyl cellulose, or alkali metal salts thereof. The alkali metal may be Na, K, or Li. Such a thickener may be included in an amount of about 0.1 to about 3 parts by weight based on 100 parts by weight of the negative electrode active material.

The conductive material is included to impart electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

The electrolyte solution for a rechargeable lithium battery includes a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may be dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. The ester-based solvent may be methyl acetate, ethyl acetate, n-propyl acetate, t-butyl acetate, methyl propionate, ethyl propionate, propyl propionate, decanolide, mevalonolactone, caprolactone, and the like. The ether-based solvent may be dibutyl ether, tetraglyme, diglyme, dimethoxyethane, 2-methyltetrahydrofuran, tetrahydrofuran, and the like. In addition, the ketone-based solvent may be cyclohexanone, and the like. In addition, the alcohol-based solvent may be ethyl alcohol, isopropyl alcohol, etc. and the aprotic solvent may be nitriles such as R¹-CN (where R¹ is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the non-aqueous organic solvent is used in a mixture, the mixture ratio may be controlled in accordance with a desirable battery performance.

The carbonate-based solvent is prepared by mixing a cyclic carbonate and a chain carbonate. In this case, when the cyclic carbonate and the chain carbonate are mixed in a volume ratio of about 1:9 to about 9:1, performance of the electrolyte solution may be improved.

In particular, in an embodiment, the non-aqueous organic solvent may include the cyclic carbonate and the chain carbonate in a volume ratio of about 2:8 to about 5:5, and as a specific example, the cyclic carbonate and the chain carbonate may be included in a volume ratio of about 2:8 to about 4:6.

As a more specific example, the cyclic carbonate and the chain carbonate may be included in a volume ratio of about 2:8 to about 3:7.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

The aromatic hydrocarbon-based solvent may be an aromatic hydrocarbon-based compound represented by Chemical Formula 3.

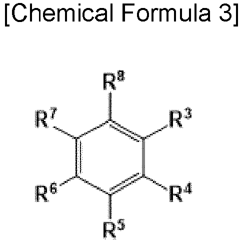

In Chemical Formula 3, R³ to R⁸ are the same as or different from each other and are selected from hydrogen, a halogen, a C1 to C10 alkyl group, a C1 to C10 haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte solution for a rechargeable lithium battery may further include at least one other additive of vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propenesultone (PST), propanesultone (PS), lithium tetrafluoroborate (LiBF₄), lithium difluorophosphate (LiPO₂F₂), and 2-fluoro biphenyl (2-FBP).

By further including the aforementioned other additives, cycle-life may be further improved or gases generated from the positive electrode and the negative electrode may be effectively controlled during high-temperature storage.

The other additives may be included in an amount of about 0.2 to 20 parts by weight, specifically about 0.2 to 15 parts by weight, for example, about 0.2 to 10 parts by weight, based on 100 parts by weight of the electrolyte solution for a rechargeable lithium battery.

When the content of other additives is as described above, the increase in film resistance may be minimized, thereby contributing to the improvement of battery performance.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂) (wherein x and y are natural numbers, for example, an integer ranging from 1 to 20), LiCl, Lil, LiB(C₂O₄)₂ (lithium bis(oxalato) borate: LiBOB), LiDFOB (lithium difluoro(oxalato)borate), and Li[PF₂(C₂O₄)₂] (lithium difluoro(bisoxalato) phosphate). The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a type of the battery. Such a separator may be a porous substrate or a composite porous substrate.

The porous substrate may be a substrate including pores, and lithium ions may move through the pores. The porous substrate may, for example, include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one of a heat-resistant layer and an adhesive layer from the viewpoint of enabling additional function. For example, the heat-resistant layer may include a heat-resistant resin and optionally a filler.

In addition, the adhesive layer may include an adhesive resin and optionally a filler.

The filler may be an organic filler or an inorganic filler.

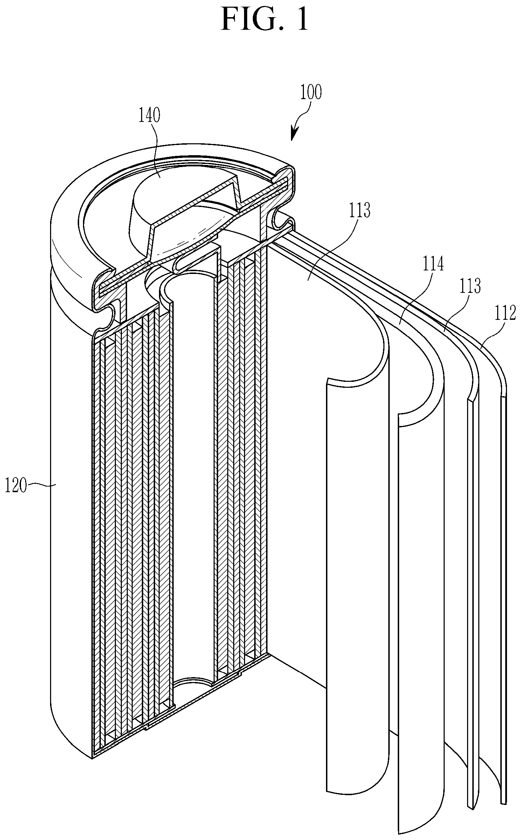

As an example of the rechargeable lithium battery, a cylindrical rechargeable lithium battery will be described. FIG. 1 schematically shows the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, and a separator 113 between the positive electrode 114 and the negative electrode 112, and an electrolyte solution (not shown) impregnating the positive electrode 114, the negative electrode 112 and the separator 113, a battery container 120 housing the battery cell, and a sealing member 140 for sealing the container 120.

Hereinafter, examples of the present disclosure and comparative examples are described. These examples, however, are not in any sense to be interpreted as limiting the scope of the invention.

### Manufacture of Rechargeable Lithium Battery Cell

### Comparative Example 1

LiNi_{0.88}Co_{0.07}Al_{0.05}O₂ as a positive electrode active material, polyvinylidene fluoride as a binder, and acetylene as a black conductive material were mixed in a weight ratio of 96:2:2 and then, dispersed in N-methyl pyrrolidone, preparing positive electrode active material slurry.

The positive electrode active material slurry was coated on a 14 µm-thick Al foil and then, dried at 110°C and pressed, manufacturing a positive electrode.

Negative electrode active material slurry was prepared by mixing a mixture of artificial graphite and Si-C composite in a weight ratio of 93:7 as a negative electrode active material, a styrene-butadiene rubber as a binder, and carboxylmethyl cellulose as a thickener in a weight ratio of 97:1:2 and dispersing the obtained mixture in distilled water.

The Si-C composite had a core including artificial graphite and silicon particles and coal pitch coated on the surface of the core.

The negative electrode active material slurry was coated on a 10µm-thick Cu foil and then, dried at 100°C and pressed, manufacturing a negative electrode.

The positive and negative electrodes were assembled with a 25µm-thick polyethylene separator to prepare an electrode assembly, and then, an electrolyte solution was injected thereinto, manufacturing a rechargeable lithium battery cell.

The electrolyte solution had the following composition.

### (Composition of Electrolyte Solution)

Salt: LiPF₆ 1.15 M
Solvent: ethylene carbonate: ethylmethyl carbonate: dimethyl carbonate (EC: EMC:DMC = volume ratio of 20:40:40)
Other additive: 1 part by weight of vinylene carbonate (VC) and 1 part by weight of LiPO₂F₂
(Herein, in the composition of the electrolyte solution, "parts by weight" means the relative weight of the additive based on 100 weight of the total (lithium salt + non-aqueous organic solvent) of the electrolyte solution excluding the additive.)

### Example 1

A rechargeable lithium battery cell was manufactured in the same manner as in Comparative Example 1 except that 0.04 parts by weight of the additive represented by Chemical Formula a-1 were mixed based on 100 parts by weight of the positive electrode active material, the binder, and the conductive material and then, dispersed in N-methyl pyrrolidone.

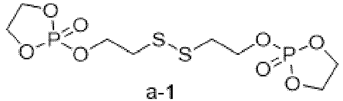

### Examples 2 to 4 and Comparative Examples 2 and 3

Each rechargeable lithium battery cell was manufactured in the same manner as in Example 1 except that the content of the additive represented by Chemical Formula a-1 was changed as shown in Table 1.

### Comparative Example 4

A rechargeable lithium battery cell was manufactured in the same manner as in Comparative Example 1 except that the additive represented by Chemical Formula a-1 in an amount shown in Table 1 was added to the electrolyte solution.

**(Table 1)**

| | Positive electrode additive | Electrolyte solution additive |
|---|---|---|
| | Chemical Formula a-1 (parts by weight) | Chemical Formula a-1 (parts by weight) |
| Comparative Example 1 | - | - |
| Comparative Example 2 | 0.0001 | - |
| Comparative Example 3 | 0.1 | - |
| Comparative Example 4 | - | 0.1 |
| Example 1 | 0.04 | - |
| Example 2 | 0.02 | - |
| Example 3 | 0.01 | - |
| Example 4 | 0.005 | - |

### Evaluation 1: Measurement of Amount of Gas Generated after High-temperature Storage

The rechargeable lithium battery cells according to Examples 1 to 4, and Comparative Examples 1 to 3 were manufactured as a 30 mAh cell belonging to 4.2 V Class, which was allowed to stand at 70 °C for 3 days and measured with respect to an amount (ml) of generated gas in an Archimedes method, and the results are shown in Table 2.

### Evaluation 2: Evaluation of DC Resistance Increase Rate after High-temperature Storage

The rechargeable lithium battery cells according to Examples 1 to 4 and Comparative Examples 1 to 3 were measured with respect to △V/△I (voltage change / current change) to obtain initial DC resistance (DC-IR) and after making a maximum energy state inside the cells into a full-charge state (SOC 100%) and storing them at 70 °C for 3 days in this state, remeasured with respect to DC resistance to calculate a DC resistance increase rate [{(DC-IR after 3 days)/(initial DC-IR)}*100], and the results are shown in Table 2.

**(Table 2)**

| | Gas amount (mL) | Initial DC resistance (Ω) | DC resistance after high-temperature storage @70°C/3D (Ω) | DC resistance increase rate (%) |
|---|---|---|---|---|
| Comparative Example 1 | 0.174 | 2.630 | 3.800 | 144.487 |
| Comparative Example 2 | 0.173 | 2.629 | 3.802 | 144.618 |
| Comparative Example 3 | 0.005 | 3.300 | 3.359 | 101.788 |
| Example 1 | 0.047 | 2.630 | 2.710 | 130.042 |
| Example 2 | 0.084 | 2.610 | 2.789 | 106.858 |
| Example 3 | 0.129 | 2.620 | 2.830 | 108.015 |
| Example 4 | 0.145 | 2.625 | 2.900 | 110.476 |

Referring to Table 2, when the additive according to the present disclosure was included in the positive electrode composition, the amount of gas generated was significantly reduced, and the DC resistance increase rate after high-temperature storage relative to the initial DC resistance was relatively gradual.

Accordingly, storage characteristics at a high temperature were improved.

### Evaluation 3: Heat Flow Evaluation

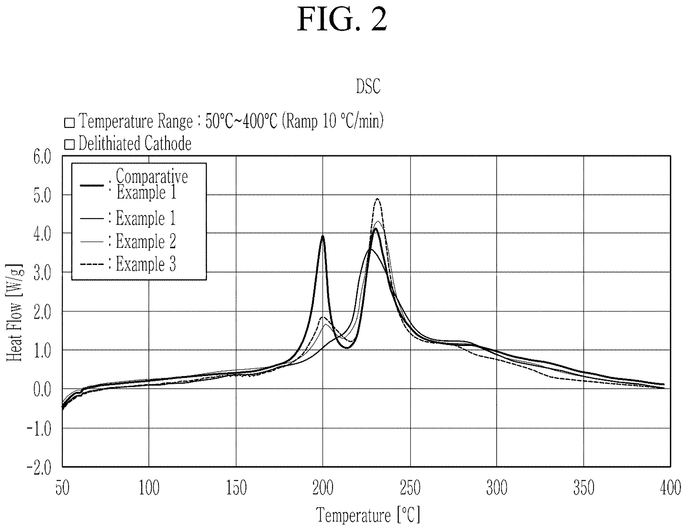

The positive electrodes according to Examples 1 to 3 and Comparative Example 1 were measured with respect to a heat flow according to a temperature through differential scanning calorimetry (DSC). A differential scanning calorimetry (SENSYS Evo, Setaram Instrumentation) was used, specifically, taking 15 mg of each electrode charged with 4.25 V (vs. Li/Li⁺), adding 20 µl of an electrolyte solution thereto, and then, heating the mixture at a rate of 10 °C/min (ramp rate) to 400 °C. The measured results are shown in FIG. 2.

FIG. 2 is a graph showing the amount of heat flow according to temperature measured by differential scanning calorimetry (DSC) for the positive electrodes according to Examples 1 to 3 and Comparative Example 1.

Referring to FIG. 2, the positive electrodes according to Examples 1 to 3 exhibited a decreased exothermic amount near 200 °C and/or 230 °C, and a delayed peak temperature and thus, excellent high temperature stability, compared with the positive electrode according to Comparative Example 1.

### Evaluation Example 4: Component Analysis of Positive Electrode Film

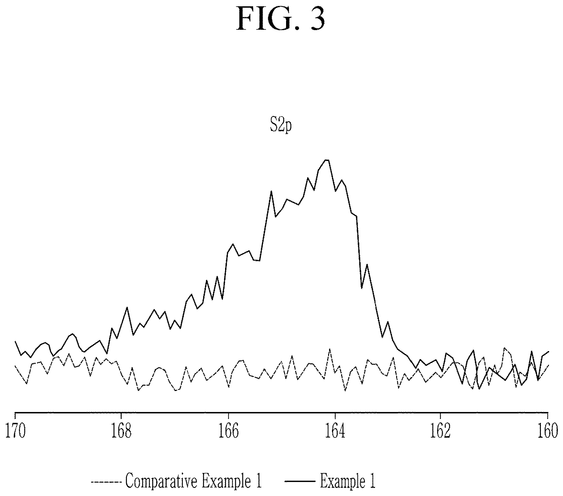

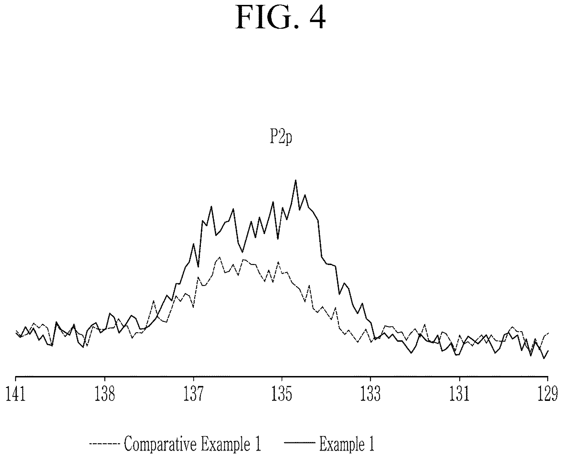

The rechargeable lithium battery cells according to Example 1 and Comparative Example 1 were analyzed through XPS (X-ray Photoelectron Spectroscopy) to analyze components of each positive electrode film, and the results are shown in FIGS. 3 and 4.

FIGS. 3 and 4 show XPS analysis results of the positive electrodes of the rechargeable lithium battery cells prepared according to Example 1 and Comparative Example 1.

Referring to FIGS. 3 and 4, Example 1 exhibited an S2p peak of binding energy around 163 eV to 165 eV, but Comparative Example 1 exhibited no S2p peak.

In addition, Example 1 exhibited a P2p peak of binding energy around 133 eV to 135 eV, but P2p peak of binding energy around 133 eV to 135 eV was almost not detected in Comparative Example 1.

Accordingly, the rechargeable lithium battery cells according to the examples of the present disclosure turned out to have a film in which the additive included in the positive electrode compositions was coordinated on the surfaces of the positive electrodes.

### Evaluation Example 5: Evaluation of Electrolyte Solution Discoloration

After respectively allowing the electrolyte solutions of Comparative Examples 1 and 4 to stand at 45°C for 3 days, a colorimeter (PFXI-195, Lovibond) was used to measure a discoloring degree in an APHA chromaticity standard measurement method, and the results are shown in Table 3.

Measurement method:
1. After filling the DIW (De-Ionized Water) in the sample cell, the blank is measured.
2. After filling the electrolyte solution sample in the sample cell, the chromaticity is measured.
3. The result value on the equipment screen is checked.

**(Table 3)**

| | Initial color (APHA) | Chromaticity after high-temperature storage @45°C/3D (APHA) |
|---|---|---|
| Comparative Example 1 | 35 | 50 |
| Comparative Example 4 | 36 | 200 |

The closer to 0 based on 500 APHA of a platinum cobalt standard solution, the more transparent, but the closer to 500 APHA, the more discolored.

The standard electrolyte solution of Comparative Example 1, that is, an electrolyte solution including no additive according to the present disclosure, the electrolyte solution of Comparative Example 4, that is, an electrolyte solution including the additive according to the present disclosure, exhibited similar initial chromaticity, but after respectively allowing the electrolyte solutions of Comparative Examples 1 and 4 to stand at 45°C for 3 days, Comparative Example 1 exhibited 50 APHA, but Comparative Example 4 exhibited 200 APHA, which showed that when the additive according to the present disclosure was included in an electrolyte solution, a high discoloring degree was found.

### Evaluation 6: Evaluation of CV Characteristics

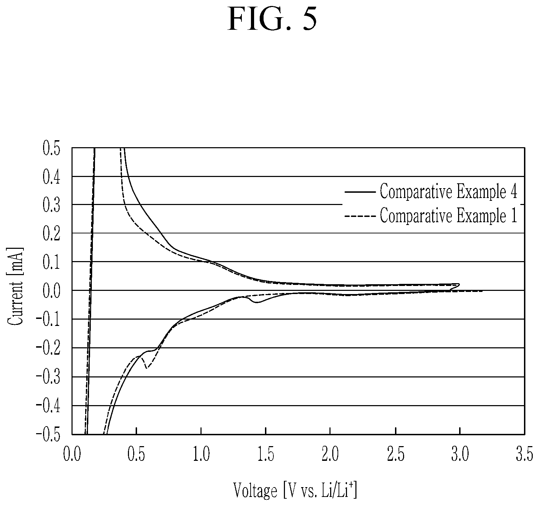

Electrochemical stability of the electrolyte solutions according to Comparative Example 1 and Comparative Example 4 was evaluated by measuring cyclic voltammetry (CV), and the results are shown in FIG. 5.

A negative electrode cyclic voltammetry (CV) was measured by using a triple electrode electrochemical cell using graphite as a working electrode and Li metals as a reference electrode and a counter electrode. Herein, scan was 3 cycles performed from 3 V to 0 V and from 0 V to 3 V at a rate of 0.1 mV/sec.

FIG. 5 is a graph showing the results of negative electrode cyclic voltammetry (CV) at room temperature of the electrolyte solutions according to Comparative Examples 1 and 4.

As shown in FIG. 5, the electrolyte solution of Comparative Example 4 exhibited a reduction decomposition peak near 1.5 V. Accordingly, the additive according to the present disclosure turned out to interact with the solvents in the electrolyte solution, and accordingly, the electrolyte solution of Comparative Example 4 was expected to form an initial Solid Electrolyte Interface (SEI) film on the negative electrode, reducing an amount of a complex compound produced from the additive at the positive electrode and thus deteriorating the surface protection effect of the positive electrode.

While this disclosure has been described in connection with what is presently considered to be practical example embodiments, it is to be understood that the invention is not limited to the disclosed embodiments.

### <Description of Symbols>

100: rechargeable lithium battery
112: negative electrode
113: separator
114: positive electrode
120: battery case
140: sealing member

## Claims

1. A positive electrode, comprising
a positive electrode active material,
a binder,
a conductive material, and
an additive represented by Chemical Formula 1 or Chemical Formula 2: 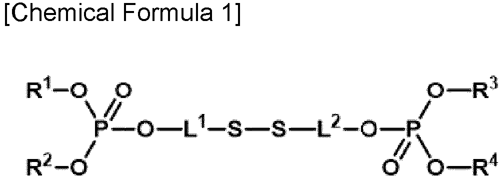 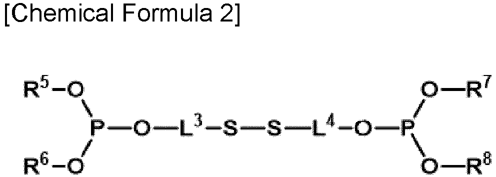
wherein, in Chemical Formula 1 and Chemical Formula 2,
R¹ to R⁸ are each independently a substituted or unsubstituted C1 to C10 alkyl group, a substituted or unsubstituted C2 to C10 alkenyl group, a substituted or unsubstituted C3 to C10 cycloalkyl group, a substituted or unsubstituted C3 to C10 cycloalkenyl group, a substituted or unsubstituted C2 to C10 alkynyl group, a substituted or unsubstituted C3 to C10 cycloalkynyl group, or a substituted or unsubstituted C6 to C20 aryl group,
R¹ to R⁸ are each independently present, or
at least one of R¹ and R²; R³ and R⁴; R⁵ and R⁶; and R⁷ and R⁸ is linked to form a substituted or unsubstituted C2 to C30 monocyclic or C2 to C50 polycyclic aliphatic heterocycle, or a substituted or unsubstituted C2 to C30 monocyclic or C2 to C50 polycyclic aromatic heterocycle, and
L¹ to L⁴ are each independently a substituted or unsubstituted C1 to C20 alkylene group.

2. The positive electrode of claim 1, wherein
Chemical Formula 1 is represented by Chemical Formula 1A or Chemical Formula 1B: 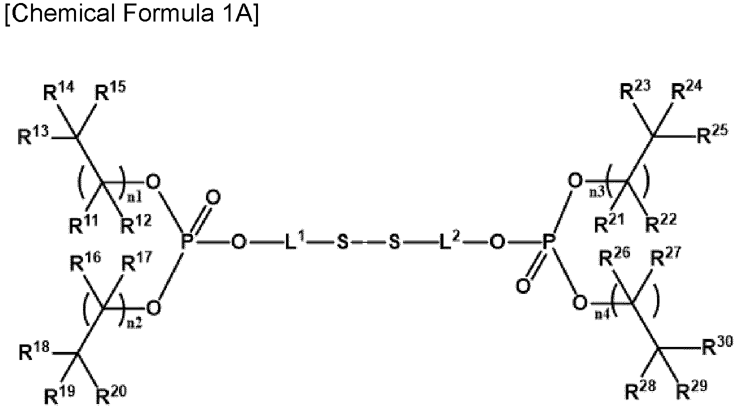
wherein, in Chemical Formula 1A,
R¹¹ to R³⁰ are each independently hydrogen, a halogen, or a substituted or unsubstituted C1 to C10 alkyl group,
n1 to n4 are each independently an integer of 0 to 4, and
L¹ and L² are each independently a substituted or unsubstituted C1 to C20 alkylene group; 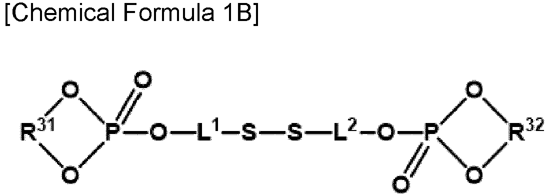
wherein, in Chemical Formula 1B,
R³¹ and R³² are each independently a substituted or unsubstituted C2 to C10 alkylene group, and
L¹ and L² are each independently a substituted or unsubstituted C1 to C20 alkylene group.

3. The positive electrode of claim 2, wherein
Chemical Formula 1B is represented by Chemical Formula 1B- I or Chemical Formula 1B-II: 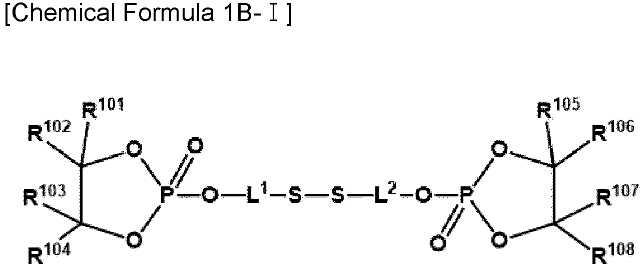 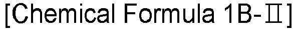 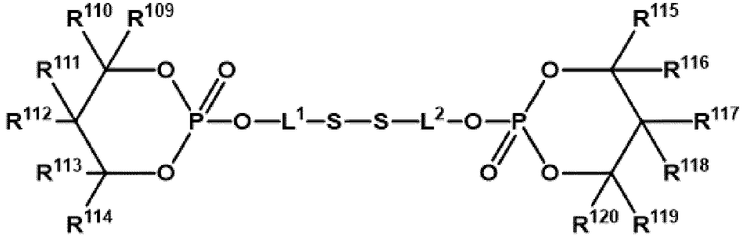
wherein, in Chemical Formula 1B- I and Chemical Formula 1B-II, R¹⁰¹ to R¹²⁰ are each independently hydrogen, a halogen, or a substituted or unsubstituted C1 to C10 alkyl group, and
L¹ and L² are each independently a substituted or unsubstituted C1 to C20 alkylene group.

4. The positive electrode of claim 1, wherein
Chemical Formula 2 is represented by Chemical Formula 2A or Chemical Formula 2B: 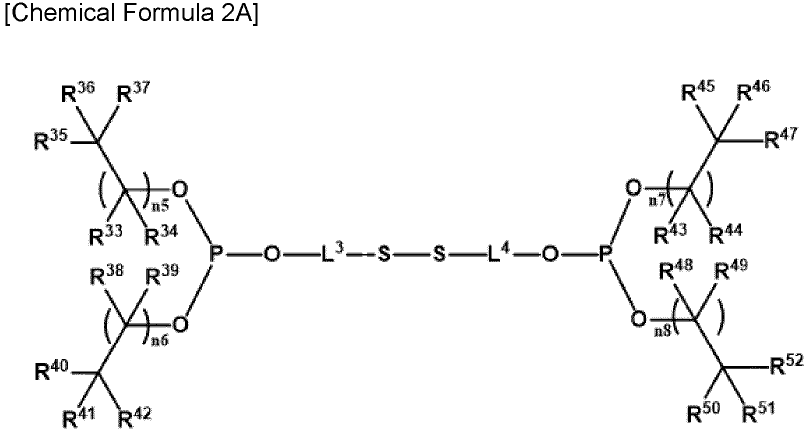
wherein, in Chemical Formula 2A,
R³³ to R⁵² are each independently hydrogen, a halogen, or a substituted or unsubstituted C1 to C10 alkyl group,
n5 to n8 are each independently an integer of 0 to 4, and
L³ and L⁴ are each independently a substituted or unsubstituted C1 to C20 alkylene group; 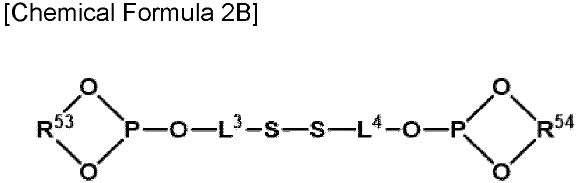
wherein, in Chemical Formula 2B,
R⁵³ and R⁵⁴ are each independently a substituted or unsubstituted C2 to C10 alkylene group, and
L³ and L⁴ are each independently a substituted or unsubstituted C1 to C20 alkylene group.

5. The positive electrode of claim 4, wherein
Chemical Formula 2B is represented by Chemical Formula 2B- I or Chemical Formula 2B-II: 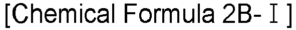 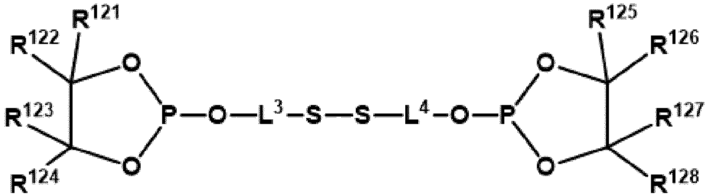 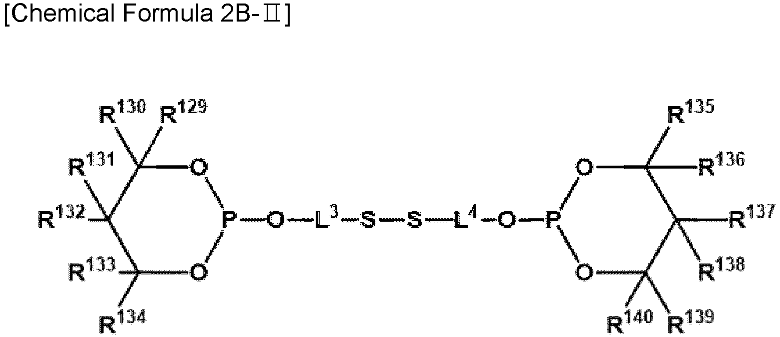
wherein, in Chemical Formula 2B- I and Chemical Formula 2B-II,
R¹²¹ to R¹⁴⁰ are each independently hydrogen, a halogen, or a substituted or unsubstituted C1 to C10 alkyl group, and
L³ and L⁴ are each independently a substituted or unsubstituted C1 to C20 alkylene group.

6. The positive electrode of claim 1, wherein
Chemical Formula 1 is represented by Chemical Formula 1B-I-1 or Chemical Formula 2B-I-1: 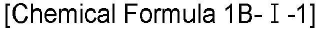 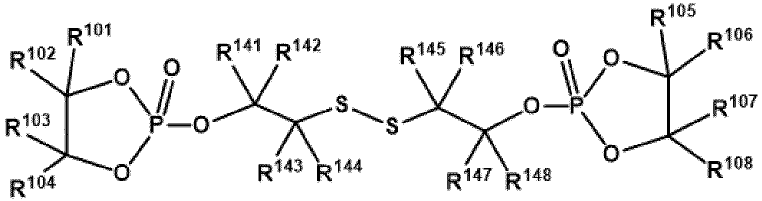 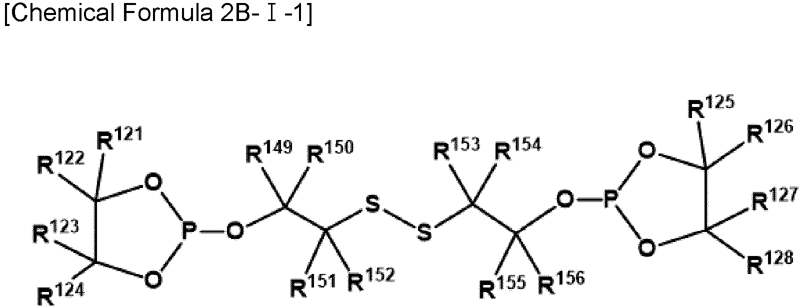
wherein, in Chemical Formula 1B-I-1 and Chemical Formula 2B- I -1,
R¹⁰¹ to R¹⁰⁸, R¹²¹ to R¹²⁸, and R¹⁴¹ to R¹⁵⁶ are each independently hydrogen, a halogen, or a substituted or unsubstituted C1 to C10 alkyl group.

7. The positive electrode of any one of claims 1 to 6, wherein
the additive is included in an amount of about 0.001 to 0.05 parts by weight based on 100 parts by weight of the positive electrode active material, the binder, and the conductive material.

8. The positive electrode of any one of claims 1 to 6, wherein
the additive is included in an amount of about 0.005 to 0.05 parts by weight based on 100 parts by weight of the positive electrode active material, the binder, and the conductive material.

9. The positive electrode of claim 1, wherein
the positive electrode active material is represented by Chemical Formula 4:
[Chemical Formula 4] LiₓM¹_{y}M²_{z}M³_{1-y-z}O_{2±a}X_{b}
wherein, in Chemical Formula 4,
0.5≤x≤1.8, 0≤a≤0.1, 0≤b≤0.1, 0<y≤1, 0≤z≤1, 0<y+z≤1, M¹, M², and M³ are each independently one or more elements selected from Ni, Co, Mn, Al, B, Ba, Ca, Ce, Cr, Fe, Mo, Nb, Si, Sr, Mg, Ti, V, W, Zr, or La, and a combination thereof, and X is one or more elements selected from F, S, P, or Cl.

10. The positive electrode of claim 9, wherein
wherein, in Chemical Formula 4,
0.8≤y≤1, 0≤z≤0.2, and M¹ is Ni.

11. A rechargeable lithium battery, comprising
the positive electrode of any one of claim 1 to claim 10;
a negative electrode including a negative electrode active material; and
an electrolyte solution for the rechargeable lithium battery.

12. **The rechargeable** lithium battery of claim 11, wherein
a positive electrode film is further included on the surface of the positive electrode, and
the positive electrode film is formed by coordinating the additive represented by Chemical Formula 1 or Chemical Formula 2 to the positive electrode active material.

13. The rechargeable lithium battery of claim 11 or claim 12, wherein
the negative electrode active material includes at least one of graphite and Si composite.

14. The rechargeable lithium battery of claim 13, wherein
the Si composite includes a core including Si-based particles and an amorphous carbon coating layer.

15. The rechargeable lithium battery of claim 14, wherein
the Si-based particles includes at least one of Si particles, a Si-C composite, SiOₓ(0 < x ≤ 2), and a Si alloy.

## Patentansprüche

1. Positivelektrode, umfassend:
ein Positivelektroden-Aktivmaterial,
ein Bindemittel,
ein leitfähiges Material und
ein Additiv, das durch chemische Formel 1 oder chemische Formel 2 dargestellt wird, 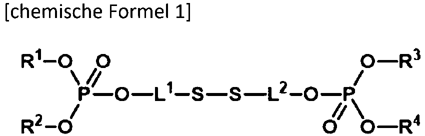 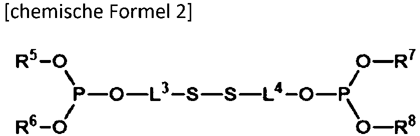
wobei in der chemischen Formel 1 und der chemischen Formel 2
R¹ bis R⁸ jeweils unabhängig voneinander eine substituierte oder nichtsubstituierte C1 bis C10 Alkylgruppe, eine substituierte oder nichtsubstituierte C2 bis C10 Alkenylgruppe, eine substituierte oder nichtsubstituierte C3 bis C10 Cycloalkylgruppe, eine substituierte oder nichtsubstituierte C3 bis C10 Cycloalkenylgruppe, eine substituierte oder nichtsubstituierte C2 bis C10 Alkinylgruppe, eine substituierte oder nichtsubstituierte C3 bis C10 Cycloalkinylgruppe oder eine substituierte oder nichtsubstituierte C6 bis C20 Arylgruppe sind,
R¹ bis R⁸ jeweils unabhängig voneinander vorliegen, oder
mindestens eines von R¹ und R²; R³ und R⁴; R⁵ und R⁶; und R⁷ und R⁸ verbunden ist, um ein substituiertes oder nichtsubstituiertes C2 bis C30 monocyclisches oder C2 bis C50 polycyclisches aliphatisches Heterocyclus oder ein substituiertes oder nichtsubstituiertes C2 bis C30 monocyclisches oder C2 bis C50 polycyclisches aromatisches Heterocyclus zu bilden, und
L¹ bis L⁴ jeweils unabhängig voneinander eine substituierte oder nichtsubstituierte C1 bis C20 Alkylengruppe sind.

2. Positivelektrode nach Anspruch 1, wobei
die chemische Formel 1 durch chemische Formel 1A oder chemische Formel 1B dargestellt wird: 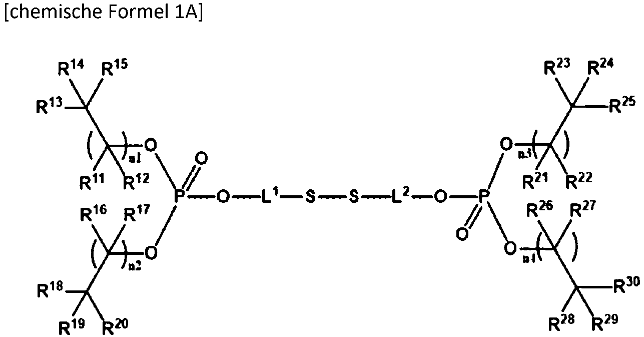
wobei in der chemischen Formel 1A
R¹¹ bis R³⁰ jeweils unabhängig voneinander Wasserstoff, ein Halogen oder eine substituierte oder nichtsubstituierte C1 bis C10 Alkylgruppe sind,
n1 bis n4 jeweils unabhängig voneinander eine ganze Zahl von 0 bis 4 sind, und
L¹ und L² jeweils unabhängig voneinander eine substituierte oder nichtsubstituierte C1 bis C20 Alkylengruppe sind; 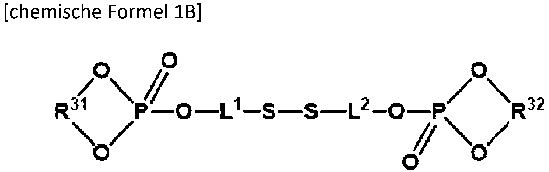
wobei in der chemischen Formel 1B
R³¹ und R³² jeweils unabhängig voneinander eine substituierte oder nichtsubstituierte C2 bis C10 Alkylengruppe sind, und
L¹ und L² jeweils unabhängig voneinander eine substituierte oder nichtsubstituierte C1 bis C20 Alkylengruppe sind.

3. Positivelektrode nach Anspruch 2, wobei
die chemische Formel 1B durch chemische Formel 1B-I oder chemische Formel 1B-II dargestellt wird: 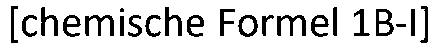 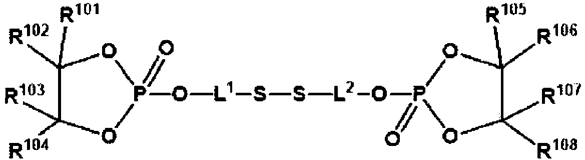 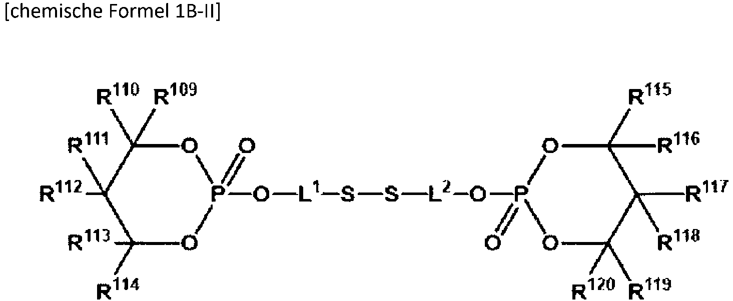
wobei in der chemischen Formel 1B-I und der chemischen Formel 1B-II
R¹⁰¹ bis R¹²⁰ jeweils unabhängig voneinander Wasserstoff, ein Halogen oder eine substituierte oder nichtsubstituierte C1 bis C10 Alkylgruppe sind, und
L¹ und L² jeweils unabhängig voneinander eine substituierte oder nichtsubstituierte C1 bis C20 Alkylengruppe sind.

4. Positivelektrode nach Anspruch 1, wobei
die chemische Formel 2 durch chemische Formel 2A oder chemische Formel 2B dargestellt wird: 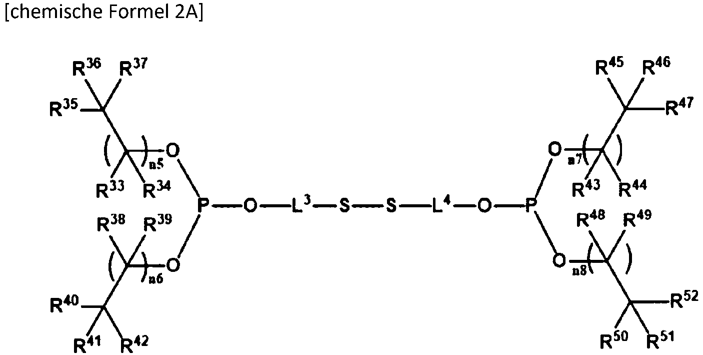
wobei in der chemischen Formel 2A
R³³ bis R⁵² jeweils unabhängig voneinander Wasserstoff, ein Halogen oder eine substituierte oder nichtsubstituierte C1 bis C10 Alkylgruppe sind,
n5 bis n8 jeweils unabhängig voneinander eine ganze Zahl von 0 bis 4 sind, und
L³ und L⁴ jeweils unabhängig voneinander eine substituierte oder nichtsubstituierte C1 bis C20 Alkylengruppe sind; 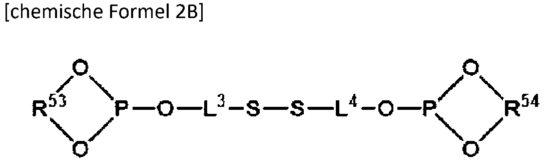
wobei in der chemischen Formel 2B
R⁵³ und R⁵⁴ jeweils unabhängig voneinander eine substituierte oder nichtsubstituierte C2 bis C10 Alkylengruppe sind, und
L³ und L⁴ jeweils unabhängig voneinander eine substituierte oder nichtsubstituierte C1 bis C20 Alkylengruppe sind.

5. Positivelektrode nach Anspruch 4, wobei
die chemische Formel 2B durch die chemische Formel 2B-I oder die chemische Formel 2B-II dargestellt wird: 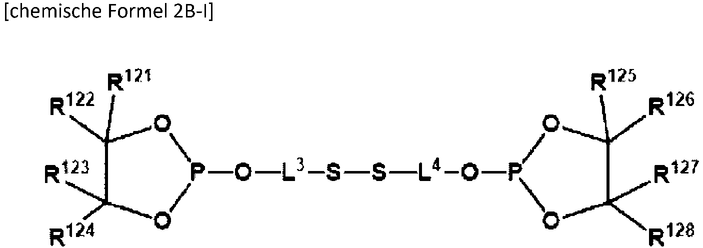 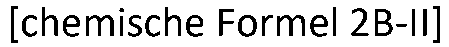 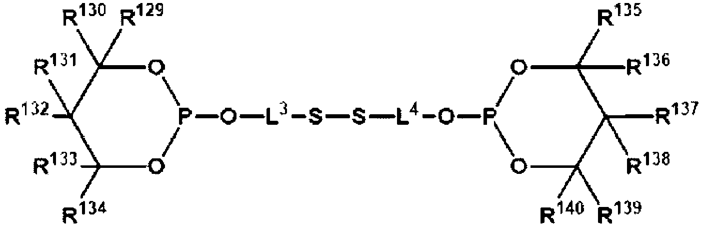
wobei in den chemischen Formeln 2B-I und 2B-II
R¹²¹ bis R¹⁴⁰ jeweils unabhängig voneinander Wasserstoff, ein Halogen oder eine substituierte oder nichtsubstituierte C1 bis C10 Alkylgruppe sind, und
L³ und L⁴ jeweils unabhängig voneinander eine substituierte oder nichtsubstituierte C1 bis C20 Alkylengruppe sind.

6. Positivelektrode nach Anspruch 1, wobei
die chemische Formel 1 durch die chemische Formel 1B-I-1 oder die chemische Formel 2B-I-1 dargestellt wird: 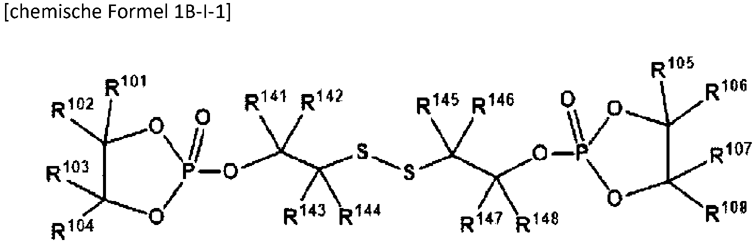 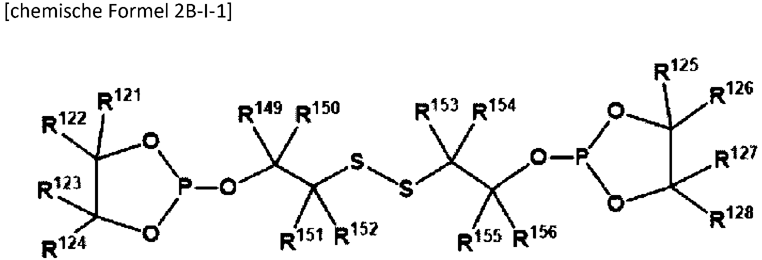
wobei in der chemischen Formel 1B-I-1 und der chemischen Formel 2B-I-1,
bei R¹⁰¹ bis R¹⁰³, R¹²¹ bis R¹²³und R¹⁴¹ bis R¹⁵⁶ jeweils unabhängig voneinander Wasserstoff, ein Halogen oder eine substituierte oder nichtsubstituierte C1 bis C10 Alkylgruppe sind.

7. Positivelektrode nach einem der Ansprüche 1 bis 6, wobei das Additiv in einer Menge von etwa 0,001 bis 0,05 Gewichtsteilen, bezogen auf 100 Gewichtsteile des Positivelektroden-Aktivmaterials, des Bindemittels und des leitfähigen Materials, beinhaltet ist.

8. Positivelektrode nach einem der Ansprüche 1 bis 6, wobei das Additiv in einer Menge von etwa 0,005 bis 0,05 Gewichtsteilen, bezogen auf 100 Gewichtsteile des Positivelektroden-Aktivmaterials, des Bindemittels und des leitfähigen Materials, beinhaltet ist.

9. Positivelektrode nach Anspruch 1, wobei
das Positivelektroden-Aktivmaterial durch chemische Formel 4 dargestellt ist:
[chemische Formel 4] LiₓM¹_{y}M²_{z}M³_{1-yz}O_{2±a}X_{b}
wobei in der chemischen Formel 4
0,5 ≤ x ≤ 1,8, 0 ≤ a ≤ 0,1, 0 ≤ b ≤ 0,1, 0 < y≤1,0 ≤ z ≤ 1,0 < y+z ≤ 1, M¹, M² und M³ jeweils unabhängig voneinander ein oder mehrere Elemente, ausgewählt aus Ni, Co, Mn, Al, B, Ba, Ca, Ce, Cr, Fe, Mo, Nb, Si, Sr, Mg, Ti, V, W, Zr oder La, und einer Kombination davon, sind, und X ein oder mehrere Elemente, ausgewählt aus F, S, P oder Cl, ist.

10. Positivelektrode nach Anspruch 9, wobei
in der chemischen Formel 4
0,8 ≤ y ≤ 1, 0 ≤ z ≤ 0,2 und M¹ Ni ist.

11. Wiederaufladbare Lithiumbatterie, umfassend
die Positivelektrode nach einem der Ansprüche 1 bis 10;
eine Negativelektrode, die ein Negativelektroden-Aktivmaterial beinhaltet; und
eine Elektrolytlösung für die wiederaufladbare Lithiumbatterie.

12. Wiederaufladbare Lithiumbatterie nach Anspruch 11, wobei
zusätzlich auf der Oberfläche der positiven Elektrode ein Positivelektrodenfilm aufgebracht wird;
der Positivelektrodenfilm durch Koordinierung des Additivs gemäß der chemischen Formel 1 oder der chemischen Formel 2 mit dem aktiven Material der Positivelektrode gebildet wird.

13. Wiederaufladbare Lithiumbatterie nach Anspruch 11 oder Anspruch 12, wobei
das Aktivmaterial der negativen Elektrode mindestens einen der Bestandteile Graphit und Si-Komposit beinhaltet.

14. Wiederaufladbare Lithiumbatterie nach Anspruch 13, wobei
der Si-Verbundwerkstoff einen Kern, beinhaltend Si-basierte Partikel, und eine amorphe Kohlenstoffbeschichtungsschicht beinhaltet.

15. Wiederaufladbare Lithiumbatterie nach Anspruch 14, wobei
die Si-basierten Partikel mindestens eines von Si-Partikeln, einem Si-C-Verbundwerkstoff, SiOₓ (0 < x ≤ 2), und einer Si Legierung beinhalten.

## Revendications

1. Électrode positive, comprenant
un matériau actif d'électrode positive,
un liant,
un matériau conducteur, et
un additif représenté par la Formule chimique 1 ou la Formule chimique 2 : 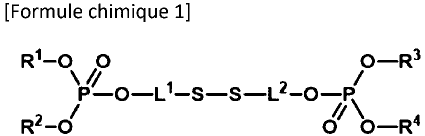 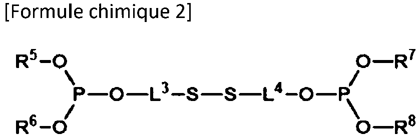
dans lequel, dans la Formule chimique 1 et la Formule chimique 2,
R¹ à R⁸ sont chacun indépendamment un groupe alkyle C1 à C10 substitué ou non substitué, un groupe alcényle C2 à C10 substitué ou non substitué, un groupe cycloalkyle C3 à C10 substitué ou non substitué, un groupe cycloalcényle C3 à C10 substitué ou non substitué, un groupe alcynyle C2 à C10 substitué ou non substitué, un groupe cycloalcynyle C3 à C10 substitué ou non substitué, ou un groupe aryle C6 à C20 substitué ou non substitué.
R¹ à R⁸ sont chacun présents indépendamment, ou
au moins l'un des R¹ et R²; R³ et R⁴; R⁵ et R⁶; et R⁷ et R⁸ sont liés pour former un hétérocycle aliphatique substitué ou non substitué monocyclique C2 à C30 ou polycyclique C2 à C50, ou un hétérocycle aromatique substitué ou non substitué monocyclique C2 à C30 ou polycyclique C2 à C50, et
L¹ à L⁴ sont chacun indépendamment un groupe alkylène C1 à C20 substitué ou non substitué.

2. Électrode positive selon la revendication 1, dans laquelle
La Formule chimique 1 est représentée par la Formule chimique 1A ou la Formule chimique 1B : 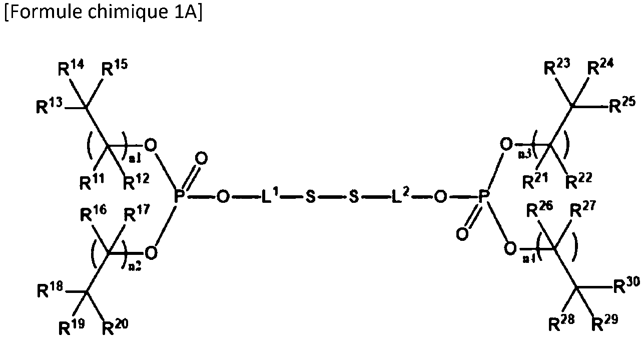
dans lequel, dans la Formule chimique 1A,
R¹¹ à R³⁰ sont chacun indépendamment un hydrogène, un halogène ou un groupe alkyle C1 à C10 substitué ou non substitué,
n1 à n4 sont chacun indépendamment un entier de 0 à 4, et
L¹ et L² sont chacun indépendamment un groupe alkylène C1 à C20 substitué ou non substitué ; 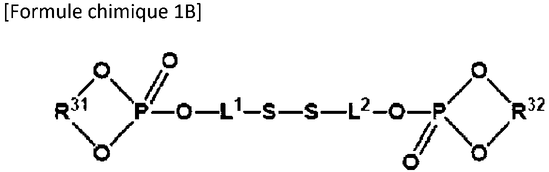
dans lequel, dans la Formule chimique 1B,
R³¹ et R³² sont chacun indépendamment un groupe alkylène C2 à C10 substitué ou non substitué, et
L¹ et L² sont chacun indépendamment un groupe alkylène C1 à C20 substitué ou non substitué.

3. Électrode positive selon la revendication 2, dans laquelle
La Formule chimique 1B est représentée par la formule chimique 1B-I ou la Formule chimique 1B-II : 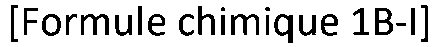 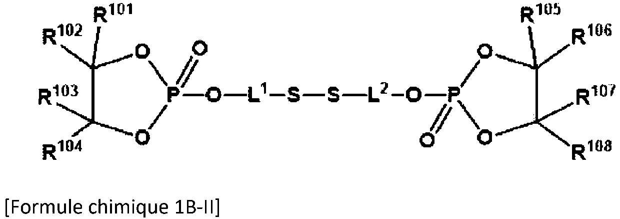 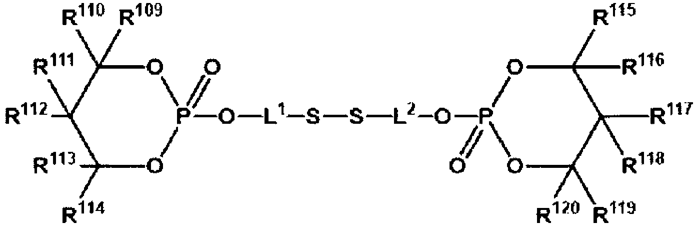
dans lequel, dans la formule chimique 1B-I et la formule chimique 1B-II,
R¹⁰¹ à R¹²⁰ sont chacun indépendamment un hydrogène, un halogène ou un groupe alkyle en C1 à C10 substitué ou non substitué, et
L¹ et L² sont chacun indépendamment un groupe alkylène C1 à C20 substitué ou non substitué.

4. Électrode positive selon la revendication 1, dans laquelle
La Formule chimique 2 est représentée par la Formule chimique 2A ou la Formule chimique 2B : 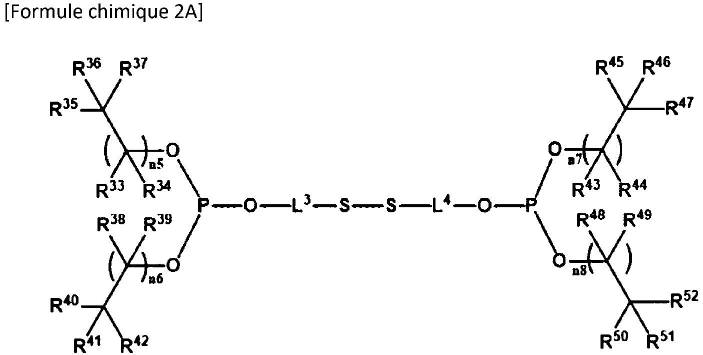
dans lequel, dans la Formule chimique 2A,
R³³ à R⁵² sont chacun indépendamment un hydrogène, un halogène ou un groupe alkyle C1 à C10 substitué ou non substitué,
n5 à n8 sont chacun indépendamment un entier de 0 à 4, et
L³ et L⁴ sont chacun indépendamment un groupe alkylène C1 à C20 substitué ou non substitué ; 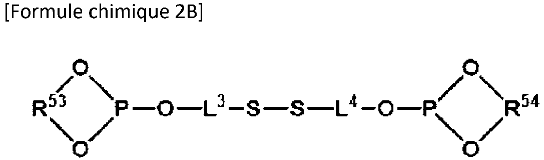
dans lequel, dans la formule chimique 2B,
R⁵³ et R⁵⁴ sont chacun indépendamment un groupe alkylène C2 à C10 substitué ou non substitué, et
L³ et L⁴ sont chacun indépendamment un groupe alkylène C1 à C20 substitué ou non substitué.

5. Électrode positive selon la revendication 4, dans laquelle
La Formule chimique 2B est représentée par la formule chimique 2B-I ou la Formule chimique 2B-II : 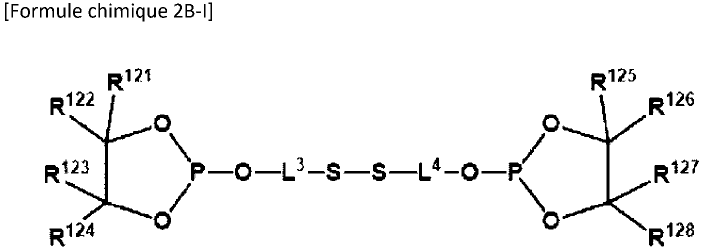 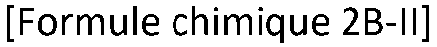 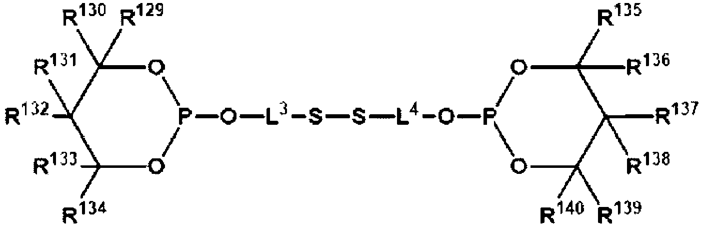
dans lequel, dans la formule chimique 2B-I et la formule chimique 2B-II, R¹²¹ à R¹⁴⁰sont chacun indépendamment un hydrogène, un halogène ou un groupe alkyle en C1 à C10 substitué ou non substitué, et
L³ et L⁴ sont chacun indépendamment un groupe alkylène C1 à C20 substitué ou non substitué.

6. Électrode positive selon la revendication 1, dans laquelle
La Formule chimique 1 est représentée par la formule chimique 1B-I-1 ou la formule chimique 2B-I-1 : 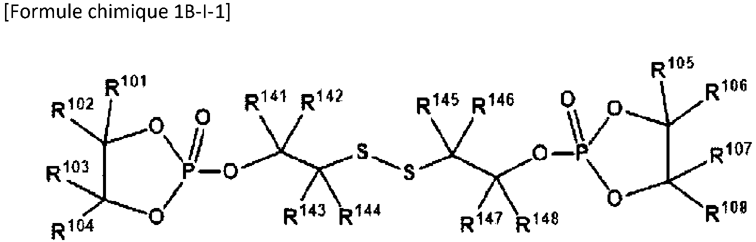 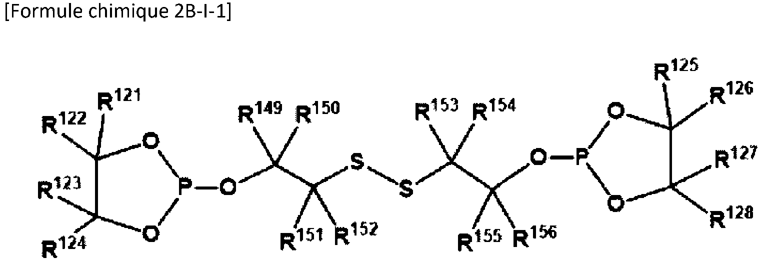
dans lequel, dans la Formule chimique 1B-I-1 et la Formule chimique 2B-I-1,
R¹⁰¹ à R¹⁰⁸, R¹²¹ à R¹²⁸ et R¹⁴¹ à R¹⁵⁶ sont chacun indépendamment un hydrogène, un halogène ou un groupe alkyle C1 à C10 substitué ou non substitué.

7. Électrode positive selon l'une quelconque des revendications 1 à 6, dans laquelle
l'additif est inclus en une quantité d'environ 0,001 à 0,05 parties en poids sur la base de 100 parties en poids du matériau actif de l'électrode positive, du liant et du matériau conducteur.

8. Électrode positive selon l'une quelconque des revendications 1 à 6, dans laquelle
l'additif est inclus en une quantité d'environ 0,005 à 0,05 parties en poids sur la base de 100 parties en poids du matériau actif de l'électrode positive, du liant et du matériau conducteur.

9. Électrode positive selon la revendication 1, dans laquelle
le matériau actif de l'électrode positive est représenté par la Formule chimique 4 :
[Formule chimique 4] LiₓM¹_{y}M²_{z}M³_{1-yz}O_{2±a}X_{b}
dans lequel, dans la Formule chimique 4,
0,5≤x≤1,8, 0≤a≤0,1, 0≤b≤0,1, 0<y≤1, 0≤z≤1, 0<y+z≤1, M¹, M², et M³ sont chacun indépendamment un ou plusieurs éléments sélectionnés parmi Ni, Co, Mn, Al, B, Ba, Ca, Ce, Cr, Fe, Mo, Nb, Si, Sr, Mg, Ti, V, W, Zr ou La, et une combinaison de ceux-ci, et X est un ou plusieurs éléments sélectionnés parmi F, S, P ou CI.

10. Électrode positive selon la revendication 9, dans laquelle
dans lequel, dans la Formule chimique 4,
0,8≤y≤1, 0≤z≤0,2 et M¹ est Ni.

11. Batterie au lithium rechargeable, comprenant :
l'électrode positive selon l'une quelconque des revendications 1 à 10 ;
une électrode négative incluant un matériau actif d'électrode négative ; et
une solution électrolytique pour batterie lithium rechargeable.

12. Batterie au lithium rechargeable selon la revendication 11, dans laquelle
un film d'électrode positive est en outre inclus sur la surface de l'électrode positive, et
le film d'électrode positive est formé en coordonnant l'additif représenté par la Formule chimique 1 ou la Formule chimique 2 au matériau actif de l'électrode positive.

13. Batterie au lithium rechargeable selon la revendication 11 ou la revendication 12, dans laquelle
le matériau actif de l'électrode négative inclut au moins un composite de graphite et de Si.

14. Batterie au lithium rechargeable selon la revendication 13, dans laquelle
le composite Si inclut un noyau constitué de particules à base de Si et une couche de revêtement en carbone amorphe.

15. Batterie au lithium rechargeable selon la revendication 14, dans laquelle
les particules à base de Si incluent au moins un des éléments suivants : particules de Si, un composite Si-C, SiOₓ (0 < x ≤ 2), et un alliage de Si.
